# EUROPEAN PATENT SPECIFICATION

(11) **EP 2 181 283 B1**
(45) Date of publication and mention of the grant of the patent: **06.11.2013**
(21) Application number: 08788225.4
(22) Date of filing: 21.07.2008
(51) Int. Cl.: F16L 37/091

(54) **PUSH-IN ADAPTOR**
EINSCHIEBBARER ADAPTER
ADAPTATEUR ENFICHABLE

(30) Priority: 19.07.2007 GB 0714017
(43) Date of publication of application: 05.05.2010
(73) Proprietor: Norgren Limited, Lichfield Staffordshire WS13 6SB (GB)
(72) Inventor: KEELING, Lee, John, Tipton, West Midlands DY4 8GE (GB)
(74) Representative: Hartwell, Ian Peter
(86) International application number: PCT/GB2008/002510
(87) International publication number: WO 2009/010778

(56) References cited:
- WO-A-2006/037963
- WO-A-2006/037971
- DE-A1- 10 157 304

## Description

### Background of the Invention

### 1. Field of the Invention

The present invention relates to a push-in adaptor, and more particularly, to a push-in adaptor including push-in mechanisms at both ends of the push-in adaptor.

### 2. Statement of the Problem

Pneumatic and hydraulic systems use pressurized gas or pressurized fluid to perform mechanical work. Consequently, such systems require networks of conduits and/or hoses and accompanying fittings. One such fitting is an adaptor that couples a first pneumatic or hydraulic component to a second pneumatic or hydraulic component.

An adaptor can be used in a pneumatic or hydraulic system for a variety of reasons. An adaptor can join flexible hoses to rigid conduits. An adaptor can join together components of different sizes or types. An adaptor can provide ease of assembly, such as a push-in fitting that enables efficient construction.

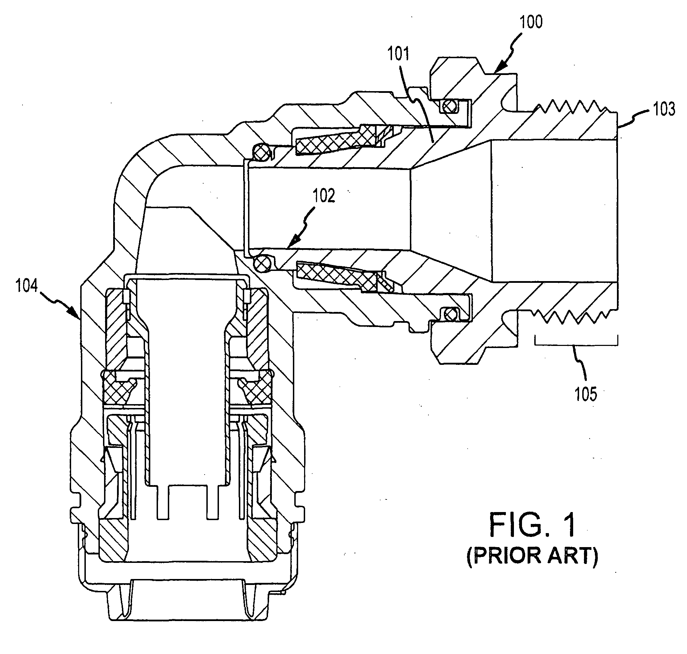

FIG. 1 shows a prior art screw-in brass adaptor 100. The prior art screw-in brass adaptor 100 comprising a substantially tubular body 101 formed of brass. The body 101 includes a first end 102 and a second end 103. The first end 102 engages with a push-in fitting 104 of a first component and the second end 103 comprises a threaded portion 105. The first component can comprise any manner of pneumatic or hydraulic component, such as a coupling (shown). The threaded portion 105 is adapted to be screwed into engagement with a threaded bore (not shown) in a second component. The threaded engagement is a standard apparatus for joining components and is strong and is generally leak-proof.

The prior art screw-in brass adaptor 100 has drawbacks. Brass is relatively heavy and can add significant mass to a system. The prior art screw-in brass adaptor 100 is expensive to produce, as brass is a costly material. Further, the machining of threads into brass is a costly and time-consuming manufacturing process. Tools are required for the assembly of the prior art screw-in brass adaptor 100 and a corresponding component. Moreover, the threaded portion 105 may not form an adequate seal and further seals or sealing material may be required in order to achieve a leak-proof junction. Threaded connections can vibrate apart and result in leakage or disconnection over time. An adaptor according to the preamble of the independent claims is known from WO2006/037971.

In one aspect of the invention there is provided:
a push-in adaptor pushed in to a first pneumatic or hydraulic component, comprising:
   an adaptor body including a first end and a second end and a bore passing fully through the body;
   a first push-in retention mechanism located on the first end, wherein the first end is pushed in to the first pneumatic or hydraulic component, with the first push-in retention mechanism comprising:
      a second groove formed circumferentially on an outer surface of the adaptor body at the first end;
      a securing element engaged with the second groove; and
      a first gripping element trapped between the securing element and a circumferential shoulder formed on the outer surface of the adaptor body, wherein the first gripping element is configured to engage and retain the push-in adaptor in the bore of the first pneumatic or hydraulic component; and
   a second push-in retention mechanism located on the second end, wherein the second end is adapted to push in to a second pneumatic or hydraulic component, characterized in that:
   the securing element engages the bore of the first pneumatic or hydraulic component.
According to a second aspect there is provided:
a push-in adaptor pushed in to a first pneumatic or hydraulic component, the adaptor being adapted for coupling a coupling device to an apparatus, the push-in adaptor comprising:
   an adaptor body including a first end and a second end and a bore passing fully through the body;
   a first push-in retention mechanism located on the first end, wherein the first end is pushed in to the first pneumatic or hydraulic component, with the first retention mechanism comprising:
      a second groove formed circumferentially on an outer surface of the adaptor body at the first end;
      a securing element engaged with the second groove; and
      a first gripping element trapped between the securing element and a circumferential shoulder formed on the outer surface of the adaptor body, wherein the first gripping element is configured to engage and retain the push-in adaptor in the bore of the first pneumatic or hydraulic component; and
   a second push-in retention mechanism located on the second end, wherein the second end is adapted to push in to a second pneumatic or hydraulic component, characterized in that:
   the securing element engages the bore of the first pneumatic or hydraulic component; and with
   the second push-in retention mechanism comprising:
      a substantially conical surface formed on the outer surface of the adaptor body at the second end;
      a circumferential shoulder located on the second end adjacent to the substantially conical surface, wherein the circumferential shoulder is configured to retain a clip on the substantially conical surface;
      the clip being positioned on the substantially conical surface, wherein the clip engages the second end of the adaptor body; and
      a second gripping element configured to be held between a step portion of the substantially conical surface and the clip, with the second gripping element abutting the step portion substantially opposite the circumferential shoulder across the substantially conical surface.
Embodiments of the invention are set out in the dependent claims.

### Description of the Drawings

The same reference number represents the same element on all drawings. It should be understood that the drawings are not necessarily to scale.
FIG. 1 shows a prior art screw-in brass adaptor.
FIG. 2 shows a portion of a push-in adaptor according to an embodiment of the invention.
FIG. 3 shows the push-in adaptor ready for use according to an embodiment of the invention.
FIGS. 4A-4B show detail of the first gripping element according to an embodiment of the invention.
FIGS. 5A-5B show detail of the second gripping element according to an embodiment of the invention.
FIG. 6 shows the push-in adaptor mated to a first pneumatic or hydraulic component according to an embodiment of the invention.
FIG. 7 shows the push-in adaptor mated to a second pneumatic or hydraulic component according to an embodiment of the invention.

### Detailed Description of the Invention

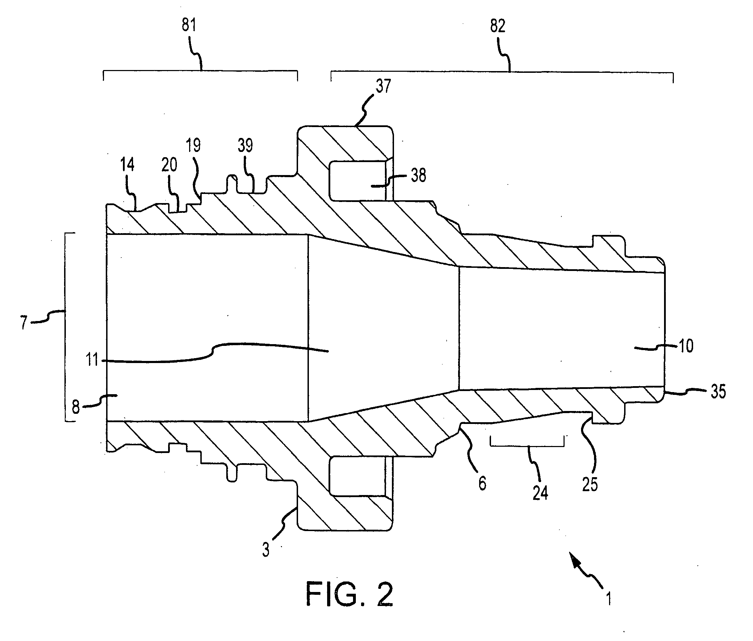

FIGS. 2-7 and the following description depict specific examples to teach those skilled in the art how to make and use the best mode of the invention. For the purpose of teaching inventive principles, some conventional aspects have been simplified or omitted. Those skilled in the art will appreciate variations from these examples that fall within the scope of the invention. Those skilled in the art will appreciate that the features describe below can be combined in various ways to form multiple variations of the invention. As a result, the invention is not limited to the specific examples described below, but only by the claims and their equivalents.

FIG. 2 shows a portion of a push-in adaptor 1 according to an embodiment of the invention. The push-in adaptor 1 is not fully configured for use in this figure. The push-in adaptor 1 includes a body 3 including a first end 81 and a second end 82 and a bore 7 that passes fully through the body 3. A first push-in retention mechanism 91 is located on the first end 81 and a second push-in retention mechanism 92 is located on the second end 82. Employing both the first push-in retention mechanism 91 and the second push-in retention mechanism 92, the push-in adaptor 1 can be quickly installed by hand in a first pneumatic or hydraulic component and in a second pneumatic or hydraulic component.

The push-in adaptor 1 has particular application in pneumatic and hydraulic systems, although, for simplicity, this description hereinafter will focus on pneumatic systems. It is common for pneumatic systems to be connected together by pneumatic lines that typically comprise hoses, such as rubber or reinforced rubber hoses, for example. This enables the transfer of pneumatic pressure from a source to a destination or between various apparatus for power and/or control purposes.

The push-in adaptor 1 may fit into a further apparatus that may comprise a valve, valve island, pressure generating means, fluid-operated tool, industrial robot or control unit, for example. Other devices are contemplated and are within the scope of the description and claims.

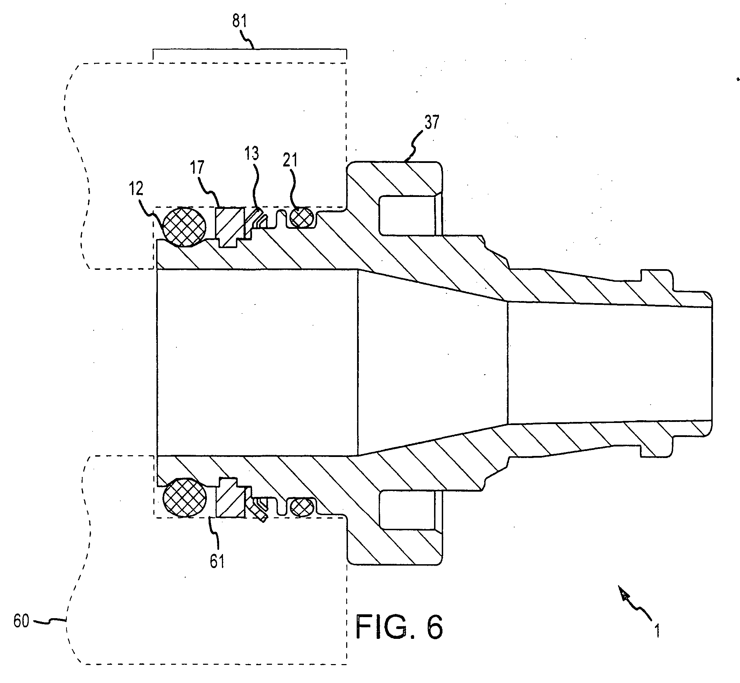

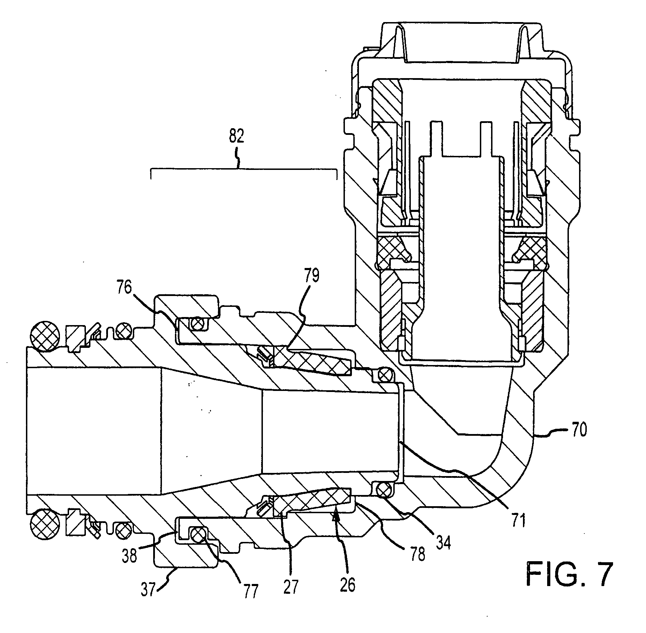

The first end 81 and the second end 82 are configured to be positioned within and sealingly mate with a first pneumatic or hydraulic component 60 and a second pneumatic or hydraulic component 70 (see FIGS. 6 and 7). The first end 81 and the second end 82 are configured to push into a first component bore 61 in the first component 60 and a second component bore 71 in the second component 70. The first and second component bores 61 and 71 can be substantially smooth and regular and can comprise drilled or machined bores, for example. However, the first and second component bores 61 and 71 do not require any special features for mating and therefore do not require a high level of smoothness or uniformity. For example, the first and second component bores 61 and 71 can be cast, molded, or otherwise formed in the first and second components 60 and 70 during forming of the body 3.

The bore 7 can be of any predetermined shape and size, as dictated by the dimensions of the body 3. The bore 7 can comprise a substantially uniform bore, if desired. Alternatively, the bore 7 can be non-uniform, as shown, including a larger diameter portion 8, a smaller diameter portion 10, and a tapering portion 11 that communicates between the larger diameter portion 8 and the smaller diameter portion 10. The larger diameter portion 8 and the tapering portion 11 of the bore 7 are formed within a larger body portion of the adaptor body 3 while the smaller diameter bore portion 10 is formed within a smaller body portion.

The first end 81 includes a first groove 14, a second groove 20, a circumferential shoulder 19, and a third groove 39. It should be understood that the three grooves and the shoulder comprise one embodiment, and the number and placement of grooves and shoulders can be varied as needed.

The second end 82 includes a circumferential shoulder 25, a substantially conical surface 24, a step portion 6, and a collar 37 including a substantially annular recess 38.

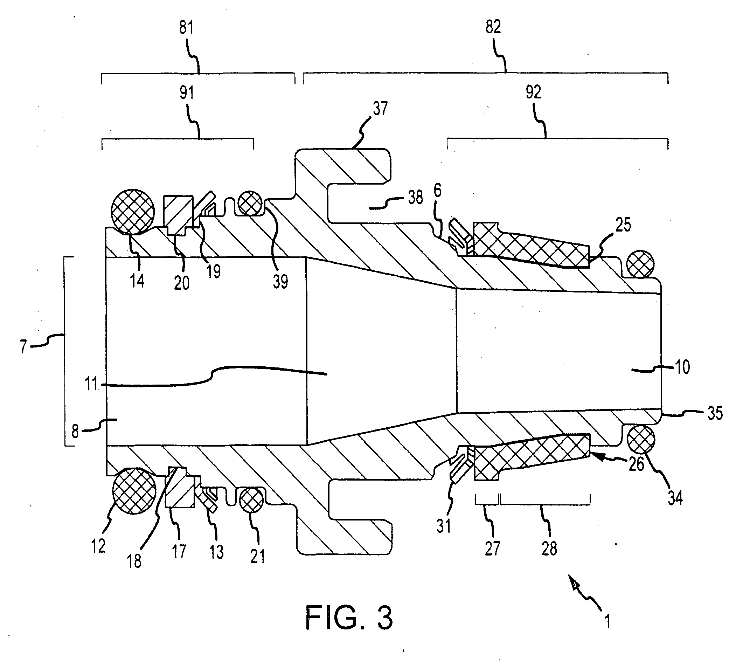

FIG. 3 shows the push-in adaptor 1 ready for use according to an embodiment of the invention. In this figure, additional components have been installed to the first and second ends 81 and 82. The first end 81 is configured to be push-in installed into a first component bore 61 of a first component 60 and the second end 82 is configured to be push-in installed into a second component bore 71 of a second component 70.

The first end 81 receives and includes a first seal 12 positioned substantially in the first groove 14. The first seal 12 and the first groove 14 can be of any predetermined shape. For example, the first groove 14 can be partially or substantially circular in shape and the first seal 12 can comprise an O-ring. However, other shapes are contemplated and are within the scope of the description and claims.

The first end 81 receives and includes a third seal 21 positioned substantially in the third groove 39. The third seal 21 and the third groove 39 can be of any predetermined shape. For example, the third groove 39 can be partially or substantially circular in shape and the third seal 21 can comprise an O-ring. Alternatively, the third groove 39 can be substantially rectangular or substantially rectangular with rounded corners, as shown. However, other shapes are contemplated and are within the scope of the description and claims.

The first end 81 receives and includes a securing element 17 in combination with a first gripping element 13. The securing element 17 in some embodiments holds the first gripping element 13 in place against the circumferential shoulder 19. The securing element 17 in some embodiments includes a tongue portion 18 that substantially engages the second groove 20. The tongue portion 18 (or the securing element 17) and the second groove 20 can be of any predetermined shape. For example, the second groove 20 can be partially or substantially rectangular in shape and the tongue portion 18 (or the securing element 17) can comprise a substantially rectangular cross-sectional seal. However, other shapes are contemplated and are within the scope of the description and claims.

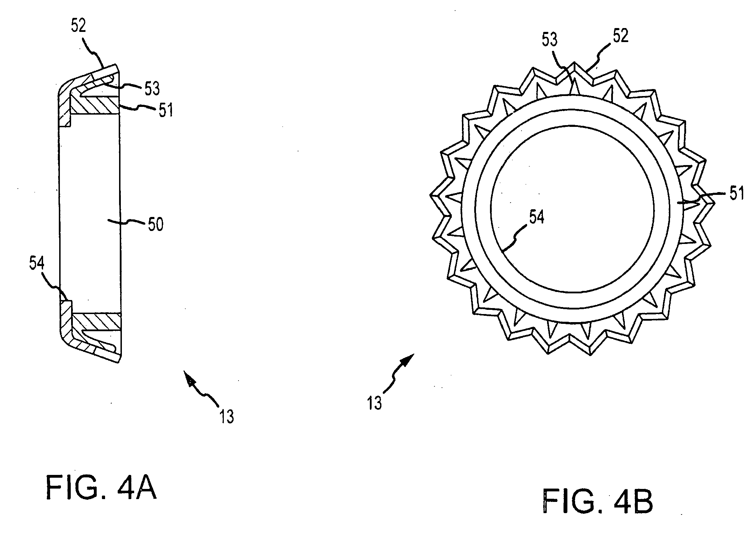

The first gripping element 13 is held substantially between the securing element 17 and the circumferential should 19 formed in the adaptor body 3. The first gripping element 13 in some embodiments is therefore immobilized on the adaptor body 3. The first gripping element 13 engages the first component bore 61 of the first component 60 (see FIG. 6) and retains the push-in adaptor 1 in the first component bore 61. It has, surprisingly, been found that the gripping and sealing elements according to the embodiments of the invention can be designed to provide a secure connection at high pressure. The first gripping element 13 is disclosed in more detail in FIGS. 4A-4B and the accompanying discussion below.

The second end 82 receives and includes a seal 34, a clip 26, and a second gripping element 31. The seal 34 is received on a reduced diameter portion 35. The reduced diameter portion 35 in some embodiments forms (or is a portion of) the circumferential shoulder 25. The circumferential shoulder 25 can prevent the seal 34 from moving farther onto the second end 82. The seal 34 can comprise any manner and shape of seal, as previously discussed.

The clip 26 is positioned on at least a portion of the substantially conical surface 24 and is located between the circumferential shoulder 25 and the step portion 6. The clip 26 is therefore substantially immobilized on the second end 82. The clip 26 engages a second component bore 71 of a second component 70.

The clip 26 includes a ring-shaped head portion 27 and a plurality of securing legs 28 extending substantially axially from the head portion 27. In some embodiments, the plurality of securing legs 28 inclines slightly toward the center or axis of the clip 26. The plurality of securing legs 28 are at least partially resilient and can flex to pass over the circumferential shoulder 25. Once in position, the plurality of securing legs 28 move resiliently inwardly and the ends of the securing legs 28 abut the circumferential shoulder 25, retaining the clip 26 on the second end 82 (see FIG. 7). The plurality of securing legs 28 therefore hold the clip 26 in position on the substantially conical surface 24. In addition, the ends of the plurality of securing legs 28 can contact a first shoulder 78 of the second component 70, preventing the push-in adaptor 1 from being pushed too far into the second component bore 71.

The head portion 27 in some embodiments contacts and abuts the second gripping element 31, wherein the head portion 27 traps the second gripping element 31 against the step portion 6. The head portion 27 extends radially outwardly past the legs 28 and functions to interact with the second component bore 71 of the second component 70. The head portion 27 of the clip 26 abuts a second shoulder 79 of the second component 70 formed in the bore 7 and is secured against it by a second gripping element 31.

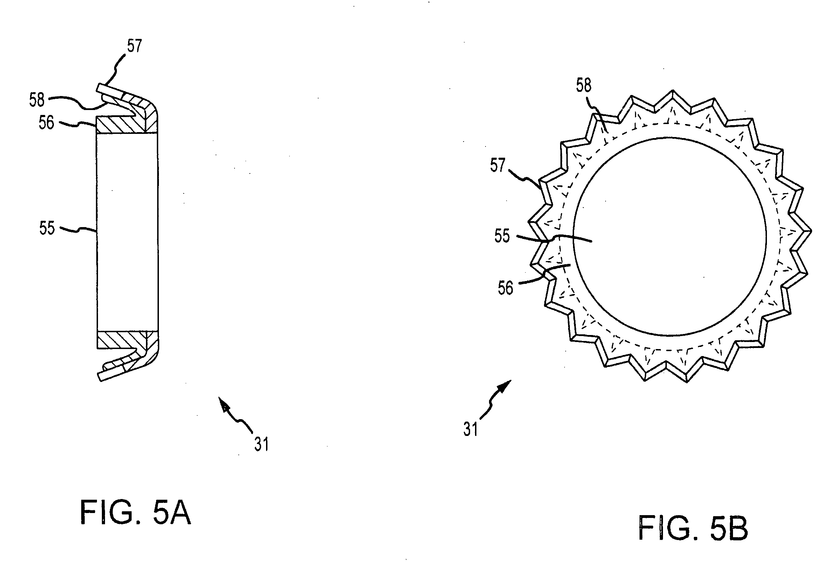

The second gripping element 31 is held substantially between the circumferential shoulder 25 and the step portion 6, wherein both the circumferential shoulder 25 and the step portion 6 can be formed in the adaptor body 3. The second gripping element 31 in some embodiments is therefore immobilized on the body 3. The second gripping element 31 engages the second component bore 71 of the second component 70 and retains the push-in adaptor 1 in the second component bore 71. It has, surprisingly, been found that the gripping and sealing elements according to the embodiments of the invention can be designed to provide a secure connection at high pressure. The second gripping element 31 is disclosed in more detail in FIGS. 5A-5B and the accompanying discussion below.

FIGS. 4A-4B show detail of the first gripping element 13 according to an embodiment of the invention. The first gripping element 13 is substantially annular in shape and fits over a portion of the first end 81 of the adaptor body 3, as previously discussed. The first gripping element 13 includes an annular member 51 including a central bore 50 and a plurality of gripping teeth 52 extending outwardly from the annular member 51. The plurality of gripping teeth 52 in some embodiments is inclined at an angle that enables insertion of the push-in adaptor 1 into the first component bore 61. The plurality of gripping teeth 52 in some embodiments is inclined at an angle that counteracts removal of the push-in adaptor 1 from the first component bore 61. However, the plurality of gripping teeth 52 can be configured to extend substantially radially outwardly in other embodiments or to extend at any predetermined angle.

The plurality of gripping teeth 52 can be substantially pointed, as shown in the figure. Alternatively, the teeth 52 can be rounded, squared off, irregular, or any other desired shape/configuration.

The plurality of gripping teeth 52 can further include ribs 53 that provide a predetermined reinforcement and stiffness to the teeth 52. The plurality of ribs 53 can extend from the annular portion. The plurality of gripping teeth 52 and the annular member 51 can be formed of the same or different material.

The plurality of gripping teeth 52 can be formed so that the material is bonded or joined to the annular portion 51. A portion of the first gripping element 13 extends past the annular portion 51 and partially radially inwardly, forming an annular extension 54 that is trapped between the securing element 17 and the circumferential shoulder 19 of the first end 81.

FIGS. 5A-5B show detail of the second gripping element 31 according to an embodiment of the invention. The second gripping element 31 is substantially annular in shape and fits over a portion of the second end 82 of the adaptor body 3, as previously discussed. The second gripping element 31 includes an annular member 56 including a central bore 55 and a plurality of gripping teeth 57 extending outwardly from the annular member 56. The plurality of gripping teeth 57 in some embodiments is inclined at an angle that enables insertion of the push-in adaptor 1 into the second component bore 71. The plurality of gripping teeth 57 in some embodiments is inclined at an angle that counteracts removal of the push-in adaptor 1 from the second component bore 71. However, the plurality of gripping teeth 57 can be configured to extend substantially radially outwardly in other embodiments or to extend at any predetermined angle.

The plurality of gripping teeth 57 can be substantially pointed, as shown in the figure. Alternatively, the teeth 57 can be rounded, squared off, irregular, or any other desired shape/configuration.

The plurality of gripping teeth 57 can further include ribs 58 that provide a predetermined reinforcement and stiffness to the teeth 57. The plurality of ribs 58 can extend from the annular portion. The plurality of gripping teeth 57 and the annular portion 56 can be formed of the same or different material.

FIG. 6 shows the push-in adaptor 1 mated to a first pneumatic or hydraulic component 60 according to the invention. The first component 60 can comprise any manner of pneumatic or hydraulic device, component, conduit, fitting, etc. The first component 60 includes a first component bore 61. As previously discussed, the first component bore 61 can be substantially smooth and does not require any threading, grooving, or other mechanical features in order to mate with the push-in adaptor 1. The bore 61 can be formed in cast metal and can comprise straight walls, parallel walls, or straight and parallel walls. The first component 60 does not require a threaded bore, as the adaptor 1 is securely retained by the first gripping element 13. This is achievable even at high pressures. This makes connection of the coupling device simple. Manufacturing costs are lowered, as threading is not required. This also allows for less expensive materials to be used, as the component does not have to support a thread.

In the figure, the push-in adaptor 1 has been completely mated with the first component 60. As a result, the first end 81 of the push-in adaptor 1 resides completely within the first component bore 61. It should be noted that the first component bore 61 can be deeper than the first end 81.

It can be seen from the figure that the first steal 12, the securing element 17, the first gripping element 13, and the third seal 21 are all at least partially compressed between and sealingly mated to the adaptor body 3 and the first component 60. The third seal 21 can additionally seal against the bore 61 in order to prevent the ingress of dust or dirt that may interfere with the first seal 12 and the first gripping element 13. The first gripping element 13 (and the other elements) resists and prevents removal of the first end 81 from the first component bore 61. Further, the multiple elements prevent wiggle of the push-in adaptor 1 and provide a stable mating connection, ensuring that leakage does not occur.

FIG. 7 shows the push-in adaptor 1 mated to a second pneumatic or hydraulic component 70 according to an embodiment of the invention. The second component 70 can comprise any manner of pneumatic or hydraulic device, component, conduit, fitting, etc. The second component 70 includes a second component bore 71. As previously discussed, the second component bore 71 can be substantially smooth and does not require any threading, grooving, or other mechanical features in order to mate with the push-in adaptor 1. In some embodiments, the second component bore 71 is also stepped in order to mate with the second end 82 of the push-in adaptor 1. A threaded bore is not required in the second component 70. This is achievable even at high pressures. This makes connection of the coupling device simple. Manufacturing costs are lowered, as threading is not required. This also allows for less expensive materials to be used, as the component does not have to support a thread.

In the figure, the push-in adaptor 1 has been completely mated with the second component 70. As a result, the second end 82 of the push-in adaptor 1 resides completely within the second component bore 71. It should be noted that the second component bore 71 can be deeper than the second end 82.

It can be seen from the figure that the seal 34 and the second gripping element 31 are all at least partially compressed between and sealingly mated to the adaptor body 3 and the second component 70. In addition, the clip 26 is substantially abutting a second shoulder 79 of the second component 70. The second gripping element 31 resists and prevents removal of the second end 82 from the second component bore 71. The legs 28 contact a first shoulder 78 of the second component 70 in order to prevent over-insertion.

Further, an annular component portion 76 can be received in the annular recess 38 of the collar 37. A corresponding seal 77 can provide a sealing contact between the annular component portion 76 and a portion of the annular recess 38. The seal 41 prevents the ingress of dirt or other foreign particles that could affect the integrity of the first gripping element 13 and the first seal 12. The multiple elements prevent wiggle of the push-in adaptor 1 and provide a stable mating connection, ensuring that leakage does not occur. Further, they prevent slippage or removal of the push-in adaptor 1, absent a large amount of force.

## Claims

1. A push-in adaptor (1) pushed in to a first pneumatic or hydraulic component, comprising:
an adaptor body (3) including a first end (81) and a second end (82) and a bore (7) passing fully through the body (3);
a first push-in retention mechanism (91) located on the first end (81), wherein the first end (81) is pushed in to the first pneumatic or hydraulic component, with the first push-in retention mechanism (91) comprising:
a second groove (20) formed circumferentially on an outer surface of the adaptor body (3) at the first end (81);
a securing element (17) engaged with the second groove (20); and
a first gripping element (13) trapped between the securing element (17) and a circumferential shoulder (19) formed on the outer surface of the adaptor body (3), wherein the first gripping element (13) is configured to engage and retain the push-in adaptor (1) in the bore of the first pneumatic or hydraulic component; and
a second push-in retention mechanism (92) located on the second end (82), wherein the second end (82) is adapted to push in to a second pneumatic or hydraulic component, **characterized in that**:
the securing element (17) engages the bore of the first pneumatic or hydraulic component.

2. The push-in adaptor (1) pushed in to a first pneumatic or hydraulic component of claim 1, with the second push-in retention mechanism (92) further comprising:
a substantially conical surface (24) formed on the outer surface of the adaptor body (3) at the second end (82);
a circumferential shoulder (25) located on the second end (82) adjacent to the substantially conical surface (24), wherein the circumferential shoulder (25) is configured to retain the clip (26) on the substantially conical surface (24);
a clip (26) positioned on the substantially conical surface (24), wherein the clip (26) engages the second end (82) of the adaptor body (3); and
a second gripping element (31) configured to be held between a step portion (6) of the substantially conical surface (24) and the clip (26), with the second gripping element (31) abutting a step portion (6) substantially opposite the circumferential shoulder (25) across the substantially conical surface (24).

3. A push-in adaptor (1) pushed in to a first pneumatic or hydraulic component, the adaptor being adapted for coupling a coupling device to an apparatus, the push-in adaptor (1) comprising:
an adaptor body (3) including a first end (81) and a second end (82) and a bore (7) passing fully through the body (3);
a first push-in retention mechanism (91) located on the first end (81), wherein the first end (81) is pushed in to the first pneumatic or hydraulic component, with the first retention mechanism (91) comprising:
a second groove (20) formed circumferentially on an outer surface of the adaptor body (3) at the first end (81);
a securing element (17) engaged with the second groove (20); and
a first gripping element (13) trapped between the securing element (17) and a circumferential shoulder (19) formed on the outer surface of the adaptor body (3), wherein the first gripping element (13) is configured to engage and retain the push-in adaptor (1) in the bore of the first pneumatic or hydraulic component; and
a second push-in retention mechanism (92) located on the second end (82), wherein the second end (82) is adapted to push in to a second pneumatic or hydraulic component, **characterized in that**:
the securing element (17) engages the bore of the first pneumatic or hydraulic component; and with
the second push-in retention mechanism (92) comprising:
a substantially conical surface (24) formed on the outer surface of the adaptor body (3) at the second end (82);
a circumferential shoulder (25) located on the second end (82) adjacent to the substantially conical surface (24), wherein the circumferential shoulder (25) is configured to retain a clip (26) on the substantially conical surface (24);
said clip (26) positioned on the substantially conical surface (24), wherein the clip (26) engages the second end (82) of the adaptor body (3); and
a second gripping element (31) configured to be held between a step portion (6) of the substantially conical surface (24) and the clip (26), with the second gripping element (31) abutting the step portion (6) substantially opposite the circumferential shoulder (25) across the substantially conical surface (24).

4. The push-in adaptor (1) pushed in to a first pneumatic or hydraulic component of claim 1 or 3, with the first push-in retention mechanism (91) further comprising:
a first groove (14) formed circumferentially on an outer surface of the adaptor body (3) at the first end (81);
a first seal (12) configured to fit partially in the first groove (14) and adapted to sealingly contact the apparatus bore;
a third groove (39) formed circumferentially on an outer surface of the adaptor body (3) at the first end (81); and
a third seal (21) configured to fit partially in the third groove (39) and adapted to sealingly contact the apparatus bore.

5. The push-in adaptor (1) pushed in to a first pneumatic or hydraulic component of claim 1 or 3, with the first gripping-element (13) or the second gripping element (31) further comprising:
an annular member (51, 56) that substantially sealingly fits to the outer surface of the adaptor body (3); and
a plurality of gripping teeth (52, 57) extending substantially radially outwardly from the annular member (51, 56).

6. The push-in adaptor (1) pushed in to a first pneumatic or hydraulic component of claim 5, with the plurality of gripping teeth (52, 57) being substantially inclined toward the annular member (51, 56).

7. The push-in adaptor (1) pushed in to a first pneumatic or hydraulic component of claim 1 or 3, wherein the body (3) is formed of a metallic material.

8. The push-in adaptor (1) pushed in to a first pneumatic or hydraulic component of claim 1 or 3, wherein the body (3) is formed of a non-metallic material.

9. The push-in adaptor (1) pushed in to a first pneumatic or hydraulic component of claim 1 or 3, wherein the body (3) is formed of a plastic material.

10. The push-in adaptor (1) pushed in to a first pneumatic or hydraulic component of claim 2 or 3, with the clip (26) further comprising:
a head portion (27); and
a plurality of securing legs (28) that extends substantially axially from the head portion (27).

11. The push-in adaptor (1) pushed in to a first pneumatic or hydraulic component of claim 2 or 3, further comprising a seal (34) located on a reduced diameter port (35) of the second end (82).

12. The push-in adaptor (1) pushed in to a first pneumatic or hydraulic component of claim 2 or 3, further comprising a collar (37) including an annular recess (38), with the collar (37) being adapted to fit over and engage a seal of the second component.

## Patentansprüche

1. Steckadapter (1), der in eine erste pneumatische oder hydraulische Komponente gesteckt wird und Folgendes umfasst:
einen Adapterkörper (3) der Folgendes umfasst, ein erstes Ende (81), ein zweites Ende (82) und eine Bohrung (7), die vollständig durch den Körper (3) verläuft;
einen ersten Steckhaltemechanismus (91), der sich an dem ersten Ende (81) befindet, wobei das erste Ende (81) in die erste pneumatische oder hydraulische Komponente gesteckt wird, wobei der erste Steckhaltemechanismus (91) Folgendes umfasst:
eine zweite Nut (20), die umlaufend an einer äußeren Fläche des Adapterkörpers (3) an dem ersten Ende (81) gebildet ist;
ein Sicherungselement (17), das in die zweite Nut (20) eingreift, und
ein erstes Greifelement (13), das zwischen dem Sicherungselement (17) und einer umlaufenden Schulter (19), die auf der äußeren Fläche des Adapterkörper (3) gebildet ist, eingefangen ist, wobei das erste Greifelement (13) so konfiguriert ist, dass es in den Steckadapter (1) in der Bohrung der ersten pneumatischen oder hydraulischen Komponente eingreift und diesen hält, und
einen zweiten Steckhaltemechanismus (92), der sich an dem zweiten Ende (82) befindet, wobei das zweite Ende (82) dafür ausgelegt ist, in eine zweite pneumatische oder hydraulische Komponente gesteckt zu werden, **dadurch gekennzeichnet, dass**:
das Sicherungselement (17) in die Bohrung der ersten pneumatischen oder hydraulischen Komponente eingreift.

2. Steckadapter (1), der in eine erste pneumatische oder hydraulische Komponente nach Anspruch 1 gesteckt wird, wobei der zweite Steckhaltemechanismus (92) ferner Folgendes umfasst:
eine im Wesentlichen konische Fläche (24), die auf der äußeren Fläche des Adapterkörpers (3) an dem zweiten Ende (82) gebildet ist;
eine umlaufende Schulter (25), die an dem zweiten Ende (82) benachbart zu der im Wesentlichen konischen Fläche (24) angeordnet ist, wobei die umlaufende Schulter (25) so konfiguriert ist, dass sie die Klammer (26) an der im Wesentlichen konischen Fläche (24) hält;
eine Klammer (26), die auf der im Wesentlichen konischen Fläche (24) angeordnet ist, wobei die Klammer (26) in das zweite Ende (82) des Adapterkörpers (3) eingreift, und
ein zweites Greifelement (31), das so konfiguriert ist, dass es zwischen einem Stufenabschnitt (6) der im Wesentlichen konischen Fläche (24) und der Klammer (26) gehalten wird, wobei das zweite Greifelement (31) an einem Stufenabschnitt (6) anliegt, der im Wesentlichen gegenüber der umlaufenden Schulter (25) an der im Wesentlichen konischen Fläche (24) angeordnet ist.

3. Steckadapter (1), der in eine erste pneumatische oder hydraulische Komponente gesteckt wird, wobei der Adapter zum Koppeln einer Kopplungsvorrichtung an ein Gerät ausgelegt ist, wobei der Steckadapter (1) Folgendes umfasst:
einen Adapterkörper (3) der Folgendes umfasst, ein erstes Ende (81), ein zweites Ende (82) und eine Bohrung (7), die vollständig durch den Körper (3) verläuft;
einen ersten Steckhaltemechanismus (91), der sich an dem ersten Ende (81) befindet, wobei das erste Ende (81) in die erste pneumatische oder hydraulische Komponente gesteckt wird, wobei der erste Haltemechanismus (91) Folgendes umfasst:
eine zweite Nut (20), die im Umfang an einer äußeren Fläche des Adapterkörpers (3) an dem ersten Ende (81) gebildet ist;
ein Sicherungselement (17), das in eine zweite Nut (20) eingreift und
ein erstes Greifelement (13), das zwischen dem Sicherungselement (17) und einer umlaufenden Schulter (19), die auf der äußeren Fläche des Adapterkörper (3) gebildet ist, eingefangen ist, wobei das erste Greifelement (13) so konfiguriert ist, dass es in den Steckadapter (1) in der Bohrung der ersten pneumatischen oder hydraulischen Komponente eingreift und diesen hält, und
einen zweiten Steckhaltemechanismus (92), der sich an dem zweiten Ende (82) befindet, wobei das zweite Ende (82) dafür ausgelegt ist, in eine zweite pneumatische oder hydraulische Komponente gesteckt zu werden, **dadurch gekennzeichnet, dass**:
das Sicherungselement (17) in die Bohrung der ersten pneumatischen oder hydraulischen Komponente eingreift,
wobei der zweite Steckhaltemechanismus (92) Folgendes umfasst:
eine im Wesentlichen konische Fläche (24), die auf der äußeren Fläche des Adapterkörpers (3) an dem zweiten Ende (82) gebildet ist;
eine umlaufende Schulter (25), die an dem zweiten Ende (82) benachbart zu der im Wesentlichen konischen Fläche (24) angeordnet ist, wobei die umlaufende Schulter (25) so konfiguriert ist, dass sie eine Klammer (26) an der im Wesentlichen konischen Fläche (24) hält;
die Klammer (26), die auf der im Wesentlichen konischen Fläche (24) angeordnet ist, wobei die Klammer (26) in das zweite Ende (82) des Adapterkörpers (3) eingreift, und
ein zweites Greifelement (31), das so konfiguriert ist, dass es zwischen einem Stufenabschnitt (6) der im Wesentlichen konischen Fläche (24) gehalten wird und an dem Stufenabschnitt (6) anliegt, der im Wesentlichen gegenüber der umlaufenden Schulter (25) an der im Wesentlichen konischen Fläche (24) angeordnet ist.

4. Steckadapter (1), der in eine erste pneumatische oder hydraulische Komponente nach Anspruch 1 oder 3 gesteckt wird, wobei der erste Steckhaltemechanismus (91) ferner Folgendes umfasst:
eine erste Nut (14), die im Umfang an einer äußeren Fläche des Adapterkörpers (3) an dem ersten Ende (81) gebildet ist;
eine erste Dichtung (12), die so konfiguriert ist, dass sie teilweise in die erste Nut (14) passt, und die dafür ausgelegt ist, die Bohrung des Gerät abdichtend zu berühren;
eine dritte Nut (39), die im Umfang an einer äußeren Fläche des Adapterkörpers (3) an dem ersten Ende (81) gebildet ist; und
eine dritte Dichtung (21), die so konfiguriert ist, dass sie teilweise in die dritte Nut (39) passt, und die dafür ausgelegt ist, die Bohrung des Gerät abdichtend zu berühren;

5. Steckadapter (1), der in eine erste pneumatische oder hydraulische Komponente nach Anspruch 1 oder 3 gesteckt wird, wobei das erste Greifelement (13) oder das zweite Greifelement (31) ferner Folgendes umfasst:
ein ringförmiges Element (51, 56), das auf die äußere Fläche des Adapterkörpers (3) im Wesentlichen abdichtend passt, und
eine Vielzahl von Greifzähnen (52, 57), die sich im Wesentlichen radial nach außen von dem ringförmigen Element (51, 56) erstrecken.

6. Steckadapter (1), der in eine erste pneumatische oder hydraulische Komponente nach Anspruch 5 gesteckt wird, wobei die Vielzahl von Greifzähnen (52, 57) im Wesentlichen in Richtung des ringförmigen Elements (51, 56) geneigt ist.

7. Steckadapter (1), der in eine erste pneumatische oder hydraulische Komponente nach Anspruch 1 oder 3 gesteckt wird, wobei der Körper (3) aus einem metallischen Material gebildet ist.

8. Steckadapter (1), der in eine erste pneumatische oder hydraulische Komponente nach Anspruch 1 oder 3 gesteckt wird, wobei der Körper (3) aus einem nicht-metallischen Material gebildet ist.

9. Steckadapter (1), der in eine erste pneumatische oder hydraulische Komponente nach Anspruch 1 oder 3 gesteckt wird, wobei der Körper (3) aus einem Kunststoffmaterial gebildet ist.

10. Steckadapter (1), der in eine erste pneumatische oder hydraulische Komponente nach Anspruch 2 oder 3 gesteckt wird, wobei die Klammer (26) ferner Folgendes umfasst:
einen Kopfabschnitt (27) und
eine Vielzahl von Sicherungsschenkeln (28), die sich im Wesentlichen axial von dem Kopfabschnitt (27) erstreckt.

11. Steckadapter (1), der in eine erste pneumatische oder hydraulische Komponente nach Anspruch 2 oder 3 gesteckt wird und ferner eine Dichtung (34) umfasst, die auf einem Anschluss (35) mit reduziertem Durchmesser des zweiten Endes (82) angeordnet ist.

12. Steckadapter (1), der in eine erste pneumatische oder hydraulische Komponente nach Anspruch 2 oder 3 gesteckt wird und ferner einen Kragen (37) umfasst, der eine ringförmige Vertiefung (38) umfasst, wobei der Kragen (37) dafür ausgelegt ist, über eine Dichtung der zweiten Komponente zu passen und in diese einzugreifen.

## Revendications

1. Adaptateur enfichable (1) enfiché au niveau d'un premier composant pneumatique ou hydraulique, comportant :
un corps d'adaptateur (3) comprenant une première extrémité (81) et une seconde extrémité (82) et un alésage (7) passant entièrement au travers du corps (3) ;
un premier mécanisme de retenue enfichable (91) situé sur la première extrémité (81), dans lequel la première extrémité (81) est enfichée au niveau du premier composant pneumatique ou hydraulique, le premier mécanisme de retenue enfichable (91) comportant :
une seconde rainure (20) formée dans le sens de la circonférence sur une surface extérieure du corps d'adaptateur (3) au niveau de la première extrémité (81) ;
un élément d'assujettissement (17) mis en prise avec la seconde rainure (20) ; et
un premier élément de préhension (13) emprisonné entre l'élément d'assujettissement (17) et un épaulement circonférentiel (19) formé sur la surface extérieure du corps d'adaptateur (3), dans lequel le premier élément de préhension (13) est configuré à des fins de mise en prise avec et de retenue de l'adaptateur enfichable (1) dans l'alésage du premier composant pneumatique ou hydraulique ; et
un second mécanisme de retenue enfichable (92) situé sur la seconde extrémité (82), dans lequel la seconde extrémité (82) est adaptée pour être enfichée au niveau d'un second composant pneumatique ou hydraulique, caractérisé en ce qui :
l'élément d'assujettissement (17) se met en prise avec l'alésage du premier composant pneumatique ou hydraulique.

2. Adaptateur enfichable (1) enfiché au niveau d'un premier composant pneumatique ou hydraulique selon la revendication 1, le second mécanisme de retenue enfichable (92) comportant en outre :
une surface sensiblement conique (24) formée sur la surface extérieure du corps d'adaptateur (3) au niveau de la seconde extrémité (82) ;
un épaulement circonférentiel (25) situé sur la seconde extrémité (82) de manière adjacente par rapport à la surface sensiblement conique (24), dans lequel l'épaulement circonférentiel (25) est configuré à des fins de retenue du collier (26) sur la surface sensiblement conique (24) ;
un collier (26) positionné sur la surface sensiblement conique (24), dans lequel le collier (26) se met en prise avec la seconde extrémité (82) du corps d'adaptateur (3) ; et
un second élément de préhension (31) configuré à des fins de retenue entre une partie à gradin (6) de la surface sensiblement conique (24) et le collier (26), le second élément de préhension (31) venant prendre appui sur une partie à gradin (6) de manière sensiblement opposée par rapport à l'épaulement circonférentiel (25) en travers de la surface sensiblement conique (24).

3. Adaptateur enfichable (1) enfiché au niveau d'un premier composant pneumatique ou hydraulique, l'adaptateur étant adapté à des fins de raccordement d'un dispositif de raccordement au niveau d'un appareil, l'adaptateur enfichable (1) comportant :
un corps d'adaptateur (3) comprenant une première extrémité (81) et une seconde extrémité (82) et un alésage (7) passant entièrement au travers du corps (3) ;
un premier mécanisme de retenue enfichable (91) situé sur la première extrémité (81), dans lequel la première extrémité (81) est enfichée au niveau du premier composant pneumatique ou hydraulique, le premier mécanisme de retenue (91) comportant :
une seconde rainure (20) formée dans le sens de la circonférence sur une surface extérieure du corps d'adaptateur (3) au niveau de la première extrémité (81) ;
un élément d'assujettissement (17) mis en prise avec la seconde rainure (20) ; et
un premier élément de préhension (13) emprisonné entre l'élément d'assujettissement (17) et un épaulement circonférentiel (19) formé sur la surface extérieure du corps d'adaptateur (3), dans lequel le premier élément de préhension (13) est configuré à des fins de mise en prise avec et de retenue de l'adaptateur enfichable (1) dans l'alésage du premier composant pneumatique ou hydraulique ; et
un second mécanisme de retenue enfichable (92) situé sur la seconde extrémité (82), dans lequel la seconde extrémité (82) est adaptée pour être enfichée au niveau d'un second composant pneumatique ou hydraulique, caractérisé en ce qui :
l'élément d'assujettissement (17) se met en prise avec le premier composant pneumatique ou hydraulique ; et
le second mécanisme de retenue enfichable (92) comportant :
une surface sensiblement conique (24) formée sur la surface extérieure du corps d'adaptateur (3) au niveau de la seconde extrémité (82) ;
un épaulement circonférentiel (25) situé sur la seconde extrémité (82) de manière adjacente par rapport à la surface sensiblement conique (24), dans lequel l'épaulement circonférentiel (25) est configuré à des fins de retenue d'un collier (26) sur la surface sensiblement conique (24) ;
ledit collier (26) étant positionné sur la surface sensiblement conique (24), dans lequel le collier (26) se met en prise avec la seconde extrémité (82) du corps d'adaptateur (3) ; et
un second élément de préhension (31) configuré à des fins de retenue entre une partie à gradin (6) de la surface sensiblement conique (24) et le collier (26), le second élément de préhension (31) venant prendre appui sur la partie à gradin (6) de manière sensiblement opposée par rapport à l'épaulement circonférentiel (25) en travers de la surface sensiblement conique (24).

4. Adaptateur enfichable (1) enfiché au niveau d'un premier composant pneumatique ou hydraulique selon la revendication 1 ou la revendication 3, le premier mécanisme de retenue enfichable (91) comportant en outre :
une première rainure (14) formée dans le sens de la circonférence sur une surface extérieure du corps d'adaptateur (3) au niveau de la première extrémité (81) ;
un premier joint d'étanchéité (12) configuré pour être partiellement installé dans la première rainure (14) et adapté pour entrer en contact de manière étanche avec l'alésage de l'appareil ;
une troisième rainure (39) formée dans le sens de la circonférence sur une surface extérieure du corps d'adaptateur (3) au niveau de la première extrémité (81) ; et
un troisième joint d'étanchéité (21) configuré pour être partiellement installé dans la troisième rainure (39) et adapté pour entrer en contact de manière étanche avec l'alésage de l'appareil.

5. Adaptateur enfichable (1) enfiché au niveau d'un premier composant pneumatique ou hydraulique selon la revendication 1 ou la revendication 3, le premier élément de préhension (13) ou le second élément de préhension (31) comportant en outre :
un élément annulaire (51, 56) qui est installé de manière sensiblement étanche sur la surface extérieure du corps d'adaptateur (3) ; et
une pluralité de dents de préhension (52, 57) s'étendant sensiblement dans le sens radial vers l'extérieur depuis l'élément annulaire (51, 56).

6. Adaptateur enfichable (1) enfiché au niveau d'un premier composant pneumatique ou hydraulique selon la revendication 5, la pluralité de dents de préhension (52, 57) étant sensiblement inclinées vers l'élément annulaire (51, 56).

7. Adaptateur enfichable (1) enfiché au niveau d'un premier composant pneumatique ou hydraulique selon la revendication 1 ou la revendication 3, dans lequel le corps (3) est formé à partir d'un matériau métallique.

8. Adaptateur enfichable (1) enfiché au niveau d'un premier composant pneumatique ou hydraulique selon la revendication 1 ou la revendication 3, dans lequel le corps (3) est formé à partir d'un matériau non métallique.

9. Adaptateur enfichable (1) enfiché au niveau d'un premier composant pneumatique ou hydraulique selon la revendication 1 ou la revendication 3, dans lequel le corps (3) est formé à partir d'un matériau plastique.

10. Adaptateur enfichable (1) enfiché au niveau d'un premier composant pneumatique ou hydraulique selon la revendication 2 ou la revendication 3, le collier (26) comportant en outre :
une partie tête (27) ; et
une pluralité de montants d'assujettissement (28) s'étendant sensiblement dans le sens axial depuis la partie tête (27).

11. Adaptateur enfichable (1) enfiché au niveau d'un premier composant pneumatique ou hydraulique selon la revendication 2 ou la revendication 3, comportant en outre un joint d'étanchéité (34) situé sur un orifice à diamètre réduit (35) de la seconde extrémité (82).

12. Adaptateur enfichable (1) enfiché au niveau d'un premier composant pneumatique ou hydraulique selon la revendication 2 ou la revendication 3, comportant en outre un collier (37) comprenant un évidement annulaire (38), le collier (37) étant adapté pour être installé sur et se mettre en prise avec un joint d'étanchéité du second composant.
